# FASCICULE DE BREVET EUROPEEN

(11) **EP 3 187 035 B1**
(45) Date de publication et mention de la délivrance du brevet: **22.04.2020**
(21) Numéro de dépôt: 16306820.8
(22) Date de dépôt: 27.12.2016
(51) Int. Cl.: A01D 75/20

(54) **MACHINE DE FENAISON AVEC UN MOYEN DE PROTECTION CONTRE LES PROJECTIONS**
HEUERNTEMASCHINE MIT EINEM SCHUTZMITTEL GEGEN SPRITZER
HAYING MACHINE WITH A SPLASH GUARD

(30) Priorité: 29.12.2015 FR 1563444
(43) Date de publication de la demande: 05.07.2017
(73) Titulaire: Kuhn SA (Societe Anonyme), 67700 Saverne (FR)
(72) Inventeur: DAUTREMONT, Emmanuel, 67320 BERG (FR); KOEPPEL, Frédéric, 67270 HOCHFELDEN (FR)
(74) Mandataire: Nuss, Laurent

(56) Documents cités:
- DE-A1- 19 718 110
- DE-U1-202011 107 679
- FR-A1- 2 987 223

## Description

La présente invention concerne le domaine des machines agricoles, plus particulièrement celui des faneurs et des andaineurs, et a pour objet une machine agricole de ce type, équipée d'un moyen de protection spécifique, permettant notamment de limiter les projections de végétaux fauchés traités par la machine, et leur dépôt et accumulation sur le dessus de cette dernière.

Les machines agricoles du type faneur et andaineur sont bien connues dans l'état de la technique en termes de construction et de mode de fonctionnement.

Ces machines de fenaison sont destinées à être attelées à et entraînées par un tracteur ou analogue, en étant tractées, portées ou semi-portées, en fonction notamment de la taille de la machine et des fonctions qu'elle réalise.

De manière habituelle, ces machines sont constituées essentiellement par un bâti avec au moins une poutre support portant des rotors animés en fonctionnement de mouvements circulaires autour d'axes de rotation sensiblement verticaux respectifs, et équipés d'au moins une roue. Chaque rotor est constitué d'une assiette qui supporte un boîtier de guidage et sur laquelle sont fixés des bras équipés de fourches dotées d'au moins deux dents flexibles. La poutre peut être d'un seul tenant ou présenter une constitution segmentée avec un segment central destiné à être relié au tracteur par un dispositif d'attelage ou d'accrochage et au moins un segment latéral repliable, relié de manière articulée avec le segment central.

De manière habituelle, une telle machine comporte en outre des moyens opérationnels pouvant, par exemple, comprendre des moyens de transmission et de distribution du mouvement aux différents rotors et, le cas échéant, des moyens de réglage de l'inclinaison et/ou de la distance au sol des rotors, des moyens de déploiement/repliement du ou des segment(s) latéral(aux) de la poutre et/ou des moyens d'orientation de la poutre par rapport au dispositif d'attelage ou d'accrochage de la machine, ainsi que leurs éventuels circuits d'alimentation hydraulique, électrique ou pneumatique.

De manière connue, certaines de ces machines de fenaison peuvent être équipées de moyens de protection des personnes (FR 2 612 362 : panneaux de protection couvrant les dents des fourches / EP 0 772 968 et EP 0 316 559 : arceaux ou barres de protection délimitant une zone de sécurité autour des rotors).

Alors que le but principal recherché avec ces machines est un ratissage du sol avec une projection vers l'arrière des végétaux, accompagnée d'une action de dispersion ou de formation d'andains et d'un retournement, des projections de végétaux non souhaitées ont également lieu, à savoir des projections ascendantes, c'est-à-dire des projections dont la composante de déplacement principale est verticale. En effet, la vitesse de rotation des dents provoque le déplacement, le soulèvement et la rotation des végétaux coupés. Si ces actions sont recherchées afin d'uniformiser et d'accélérer le séchage naturel, certaines projections ne le sont pas.

La modification de l'inclinaison de l'axe de rotation des rotors et/ou de la forme des dents pourraient diminuer les projections, mais le but recherché pour le séchage serait également moins bien atteint.

Ces projections non souhaitées lors du traitement de végétaux avec ces machines sont d'autant plus importantes que les végétaux sont secs.

Dans ce contexte, on connaît également des dispositifs de protection de second type pour éviter soit une interférence des végétaux traités avec les organes mobiles de la machine, soit un dépôt des végétaux traités dans une zone non adjacente.

Ainsi, par le document FR 2 719 742, on connaît une machine de fenaison dont les bras des rotors à fourches sont pourvus de déflecteurs pour empêcher le fourrage de s'y accrocher.

Cet exemple de second type de moyens de protection n'agit que localement, au niveau de l'élément concerné sur lequel ils doivent être fixés individuellement. De plus, ils ne permettent pas d'éviter l'accumulation de végétaux, compliquent la construction des rotors ou roues (et donc leur prix de revient). Enfin, ces moyens de protection sont également entraînés en rotation par les rotors et peuvent ainsi accentuer la projection de végétaux.

La présente invention a pour but de pallier au moins les principaux inconvénients précités et de proposer une solution simple, efficace et aisée à mettre en œuvre, permettant de limiter les projections de végétaux fauchés traités par la machine et leur dépôt et accumulation sur le dessus de cette dernière, d'éviter à la machine de possibles disfonctionnements, voire des endommagements, dus à l'accumulation de végétaux et aux éventuels bourrages résultants et d'éviter à l'utilisateur des nettoyages répétitifs, résultant en des interruptions de travail récursives et pénalisantes.

A cet effet, l'invention a pour objet une machine de fenaison du type citée en introduction et caractérisée en ce qu'elle comporte au moins un moyen de protection de type surfacique qui s'étend principalement dans un plan sensiblement perpendiculaire aux axes de rotation des rotors en position de travail de la machine, qui est fixe par rapport au bâti en phase de travail de la machine et qui recouvre au moins partiellement l'avant d'au moins un rotor, préférentiellement de tous les rotors.

Un autre résultat intéressant obtenu grâce aux dispositions précitées de l'invention est de permettre également de limiter les projections, ainsi que l'accumulation par adhérence, de végétaux coupés, notamment de particules fines et coulantes de ces végétaux, sur de multiples surfaces de la machines, notamment sur l'avant de la poutre et des moyens opérationnels.

Enfin, l'invention permet également une amélioration du flux de végétaux. En effet, la protection crée une certaine barrière, au moins partielle, à l'écoulement d'air et/ou aux turbulences créés par l'animation de la machine. La prévision d'une telle protection sur ce type de machine permet ainsi de mieux canaliser les végétaux projetés et d'obtenir une dépose plus régulière, ce qui résulte en une meilleure aération et un séchage plus uniforme.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1A est une vue de dessus d'une machine de fenaison en configuration de travail d'un premier type comportant un moyen de protection selon l'invention, lequel présente une étendue limitée et est constitué de plusieurs parties ;
la figure 1B est une vue de dessus d'une machine de fenaison selon une autre variante de réalisation de celle représentée figure 1, attelée à un tracteur et en configuration de travail, comportant un moyen de protection selon l'invention, de nature surfacique et en une seule pièce ;
la figure 1C est une vue de dessus d'une machine de fenaison selon un second type, dans laquelle les rotors sont arrangés de manière décalée entre eux, et sont pourvus chacun d'une partie d'un moyen de protection ou d'un moyen de protection propre ;
la figure 2 est une représentation schématique partielle d'une machine de fenaison selon l'invention (du premier type précité) illustrant une paire de rotors adjacents présentant une zone de convergence frontale recouverte d'une partie d'un moyen de protection selon l'invention ;
les figures 3A et 3B sont des vues en élévation latérale de la machine de fenaison représentée figure 1B , illustrant deux variantes de réalisation du moyen de protection (figure 3A : sans extension frontale / figure 3B : avec extension frontale) ;
la figure 4A est une demi-vue en élévation frontale d'une machine de fenaison du type représentée figure 1B et comportant un moyen de protection s'étendant de manière continue sur toute la largeur de la machine ;
la figure 4B est une demi-vue de dessus de la machine de fenaison représentée figure 1B, comportant un moyen de protection en plusieurs parties selon une autre variante de réalisation de l'invention ;
la figure 5 est une vue latérale en perspective d'une variante de la machine de fenaison représentée respectivement sur les figures 1B, 3 et 4, dans laquelle le moyen de protection est d'un seul tenant et comporte une extension latérale ;
la figure 6 est une vue en perspective de la machine représentée figure 1B, ladite machine étant en configuration repliée de transport, et,
les figures 7A à 7C sont des vues partielles et de détail, à des échelles différentes, illustrant différentes variantes de positionnement et de fixation du moyen de protection surfacique sur la machine de fenaison représentée sur les figures précitées.

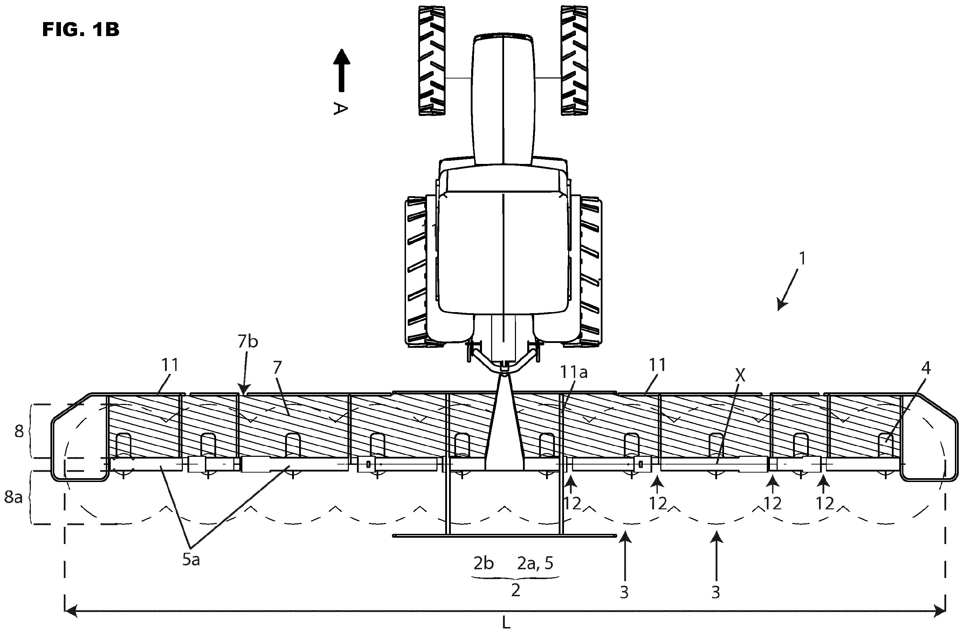

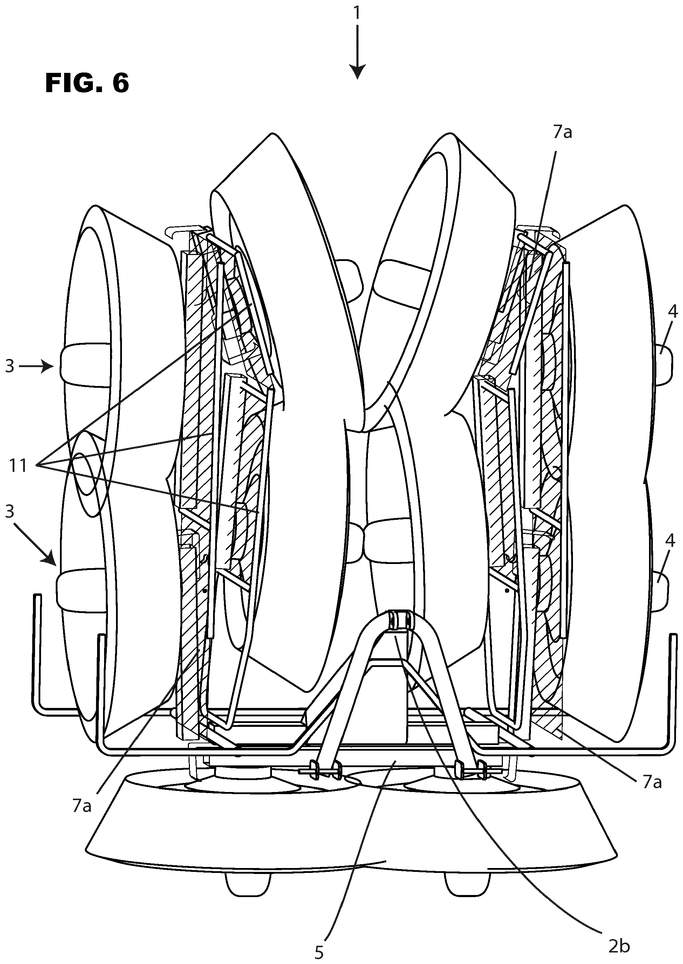

Sur les figures 1B, 1C, 2 et 4 à 6, les rotors 3 à fourches 3a sont représentés schématiquement par les cercles décrits par leurs dents extérieures respectives.

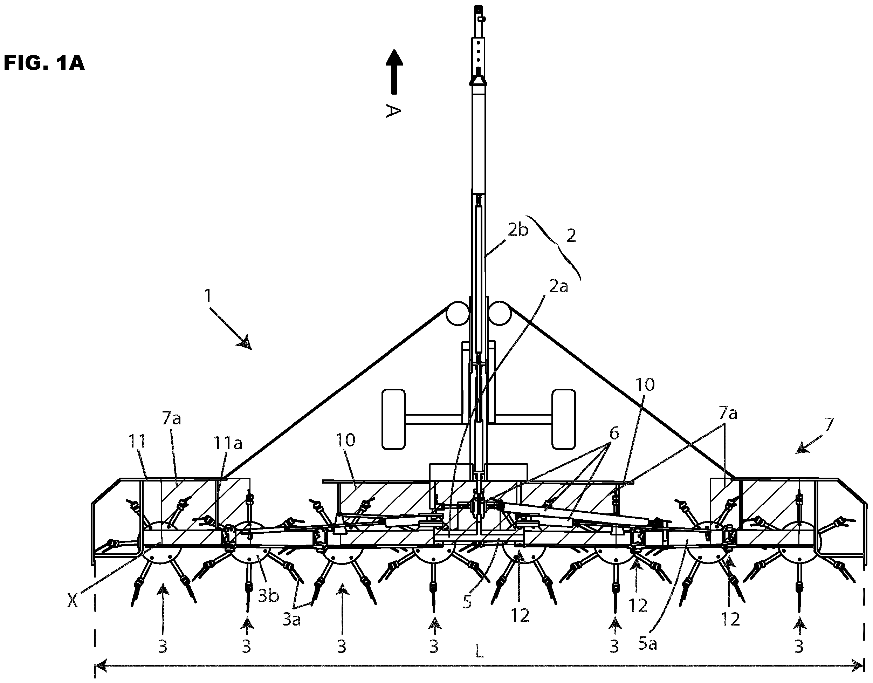

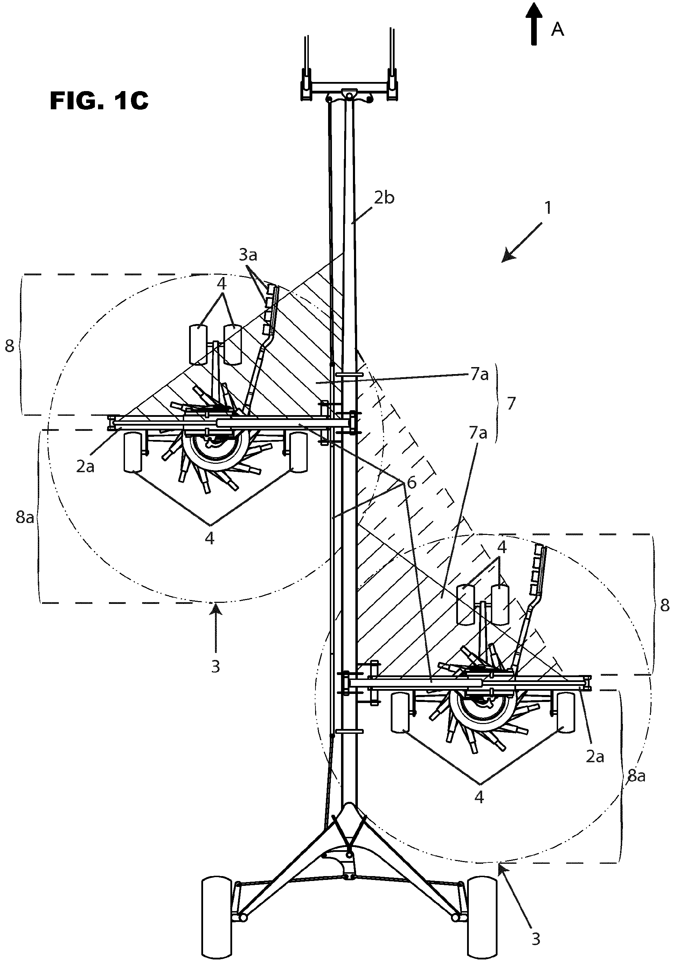

Les figures 1 à 6 montrent toutes, en partie ou en totalité, une machine de fenaison 1 du type faneur ou andaineur, tractée, portée ou semi-portée, constituée essentiellement par un bâti 2 avec au moins une poutre support 2a portant des rotors 3 à fourches 3a animés, en fonctionnement, de mouvements circulaires autour d'axes de rotation X sensiblement verticaux respectifs, et équipés d'au moins une roue 4. Cette poutre 2a peut être d'un seul tenant ou présenter une constitution segmentée avec un segment central 5 destiné à être relié au tracteur par un dispositif d'attelage ou d'accrochage 2b (faisant également partie du bâti 2) et au moins un segment latéral 5a repliable, relié de manière articulée avec le segment central 5.

Généralement, ladite machine 1 comporte en outre des moyens opérationnels 6 comprenant des moyens de transmission et de distribution du mouvement aux différents rotors 3 et, le cas échéant, des moyens de réglage de l'inclinaison et/ou de la distance au sol des rotors 3, des moyens de déploiement/repliement du ou des segment(s) latéral(aux) 5a de la poutre 2a et/ou des moyens d'orientation de la poutre 2a par rapport au dispositif 2b d'attelage ou d'accrochage de la machine 1, ainsi que leurs éventuels circuits d'alimentation hydraulique, électrique ou pneumatique (non représentés).

Comme le montrent les figures 1A (faneur traîné) et 1B (faneur porté), les rotors 3 peuvent être arrangés de manière alignée, transversalement à la direction d'avancement (en position principale de travail), en formant ainsi des paires de rotors 3 adjacents.

Comme le montre en variante la figure 1C (andaineur à dépose latérale), les rotors 3 peuvent également être arrangés de manière décalée longitudinalement et latéralement.

Dans le premier cas précité (figures 1A et 1D), l'unique poutre support 2a est arrangée transversalement à la direction d'avancement A (en position principale de travail) et dans le deuxième cas (figure 1C), les poutres support individuelles 2a de chaque rotor 3 sont arrangées de part et d'autre et de manière espacée le long du longeron central 2b du bâti 2.

Bien entendu, dans le cadre de la variante de réalisation illustrée à titre d'exemple sur la figure 1C, il est également possible que les deux rotors soient alignés ou encore que chacun des rotors soit doublé, voire triplé.

Une machine du type correspondant à la figure 1C, mais dépourvue du moyen 7, est par exemple divulguée par le document FR 2 987 223.

Conformément à l'invention, la machine de fenaison 1 comporte au moins un moyen 7 de protection de type surfacique qui s'étend principalement dans un plan PH sensiblement perpendiculaire aux axes de rotation X des rotors 3 en position de travail de la machine 1, qui est fixe par rapport au bâti 2 en phase de travail de la machine 1 et qui recouvre au moins partiellement l'avant d'au moins un rotor 3, préférentiellement de tous les rotors 3 de la machine 1, en étant situé au-dessus dudit ou desdits rotor(s) 3.

Les parties de la machine 1, qui par leur simple présence dans les zones critiques de projection font déjà barrage aux projections telles que par exemple la poutre 2a, les poutres individuelles 2a ou des parties du châssis 2, peuvent ne pas être recouvertes par le moyen de protection 7.

Par "région avant" ou "l'avant" des rotors 3, on entend dans la présente une zone 8 de la machine 1 ou des parties 8 des rotors 3 située(s) à l'avant, dans la direction d'avancement A, du ou des plans contenant les axes de rotation X des rotors 3 et perpendiculaire(s) à A dans la position principale de travail, l'avant ou la région avant 8 concernant normalement la largeur totale L de la machine 1.

En accord avec une variante de réalisation avantageuse de l'invention, illustrée par les figures 1A, 1B, 2 et 4, le moyen de protection 7 de type surfacique, ou les parties 7a constitutives de ce dernier, présente(nt) un positionnement, une forme et des dimensions adaptés pour recouvrir au moins les zones de convergence ZC des différentes paires entre les rotors adjacents 3 en configuration ou phase de travail de la machine 1, lorsque lesdits rotors 3 sont alignés transversalement par rapport à la direction d'avancement A de la machine 1.

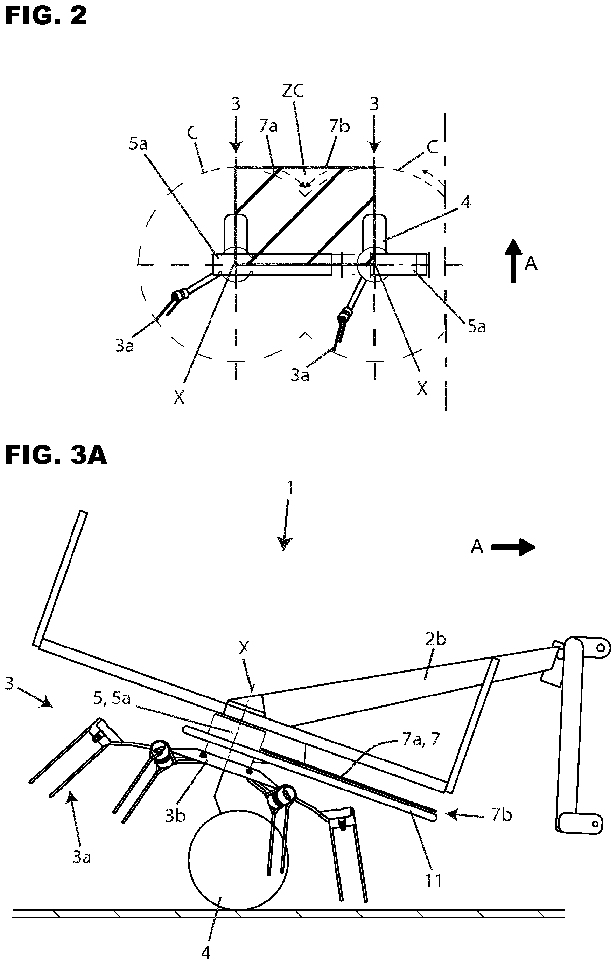

Par "zones de convergence", on entend dans la présente, comme le montre la figure 2 annexée, des zones ZC situées à l'avant de la machine 1 (c'est-à-dire du côté frontal dans la direction d'avancement de cette dernière en phase de travail) et au niveau desquelles les fourches 3a de deux rotors 3 adjacents ont des déplacements circulaires convergents l'un vers l'autre. Ces zones, qui peuvent avoir des extensions variables dans les différentes directions d'un plan horizontal ou perpendiculaire aux axes de rotation X, comprennent au moins les deux arcs de cercle décrits par les extrémités 3ades dents extérieures des fourches 3a de deux rotors 3 adjacents, entre leurs positions respectives les plus avant et le point d'intersection des deux cercles virtuels décrits par lesdites extrémités dans le plan précité.

En effet, des essais effectués par les inventeurs ont permis de constater que la grande majorité du fourrage projeté qui se retrouvait sur le dessus de la machine 1, s'y agglomérait en tas et était susceptible de générer des disfonctionnements, provenait de la région avant des rotors 3, plus particulièrement de la région des zones de convergence ZC précitées.

Ainsi, avec une extension surfacique limitée, par exemple réduite aux seules zones de convergence ZC, ou préférentiellement à des régions (préférentiellement rectangulaires) au moins légèrement plus grandes renfermant ces zones (figure 2), il est possible de répondre de manière satisfaisante au but fixé à l'invention, en évitant de manière efficace au moins les principales projections pénalisantes de végétaux lors des phases de travail de la machine 1.

De manière analogue, lorsque les rotors 3 sont arrangés de manière individuelle (figure 1C), les parties 7a séparées formant le moyen de protection 7 peuvent s'étendre uniquement sur une zone avant du rotor 3 concerné qui ne recouvre qu'une région délimitée, identifiée expérimentalement comme étant la plus exposée aux projections. Sur la figure 1C, les parties 7a présentent ainsi une forme triangulaire délimitée par le longeron 2b du châssis 2 et la poutre support 2a individuelle de chaque rotor 3 (l'hypoténuse de ce triangle rectangle peut présenter des inclinaisons et des longueurs variées en fonction de la zone à protéger - cf. tracés en trait continu ou discontinu).

De plus, une telle réalisation minimaliste en termes d'extension du moyen de protection 7 permet de limiter au maximum d'éventuelles interférences avec les moyens d'actionnement ou lors des changements de configuration de la machine 1.

Bien entendu, une plus grande extension du moyen de protection permet d'aboutir à un résultat encore amélioré.

Ainsi, en accord avec un mode de réalisation préféré, ressortant des figures 1B et 1C, le moyen 7 de protection peut s'étendre, de manière continue ou en plusieurs parties 7a, préférentiellement sur au moins toute la largeur de travail L de la machine 1 et recouvrir au moins les parties 8 des rotors 3 à fourches 3a situées à l'avant de la poutre 2a dans la direction A d'avancement normal de la machine 1 en utilisation.

Par "parties avant 8" des rotors, on entend dans la présente les parties des cercles balayés par les extrémités des dents extérieures des fourches 3a des rotors 3, qui s'étendent devant la poutre 2a dans la direction d'avancement A.

Le moyen 7 peut alors être d'un seul tenant ou en deux ou plusieurs parties 7a, avec éventuellement une interruption au niveau de certaines zones, moins critiques (rotors voisins non convergents) ou trop compliquées à protéger.

L'homme du métier comprend que le moyen de protection 7 de type surfacique est adapté en taille et en forme aux dimensions et à la structure de la machine de fenaison 1 sur laquelle il est monté, ce également en fonction de la ou des zone(s) à protéger.

Pour une machine de fenaison 1 présentant un arrangement de rotors 3 en ligne, telle que représentée par exemple sur les figures 1A et 1B, le moyen de protection 7 surfacique peut présenter avantageusement une forme rectangulaire allongée en configuration de travail de la machine 1 et faire état d'un bord longitudinal avant 7b situé, vue de dessus ou par projection au sol (figures 1A et 1B), au moins au niveau des portions d'arc frontales des cercles décrits par les fourches 3a, préférentiellement légèrement décalé vers l'avant par rapport à ces portions.

Le positionnement du moyen de protection 7, au-dessus et à distance non interférente avec les fourches 3a en rotation, et avec une extension et une couverture sensiblement continues sur toute la largeur de travail L de la machine 1, permet, d'une part, de constituer une barrière contre toute projection vers le haut du fourrage déplacé par les fourches 3a (sans influencer la projection vers l'arrière) et, d'autre part, de former une enveloppe déflectrice ou un capot de préservation contre les éventuels dépôts par le dessus provenant de projections intempestives ou provoquées par le vent ou encore provoquées par les courants d'air dues aux mouvements des rotors ou de la machine elle-même.

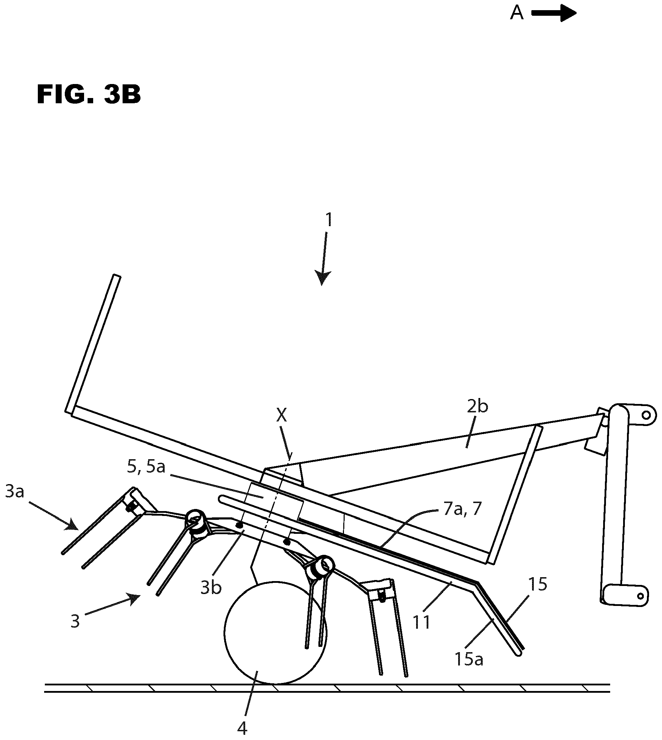

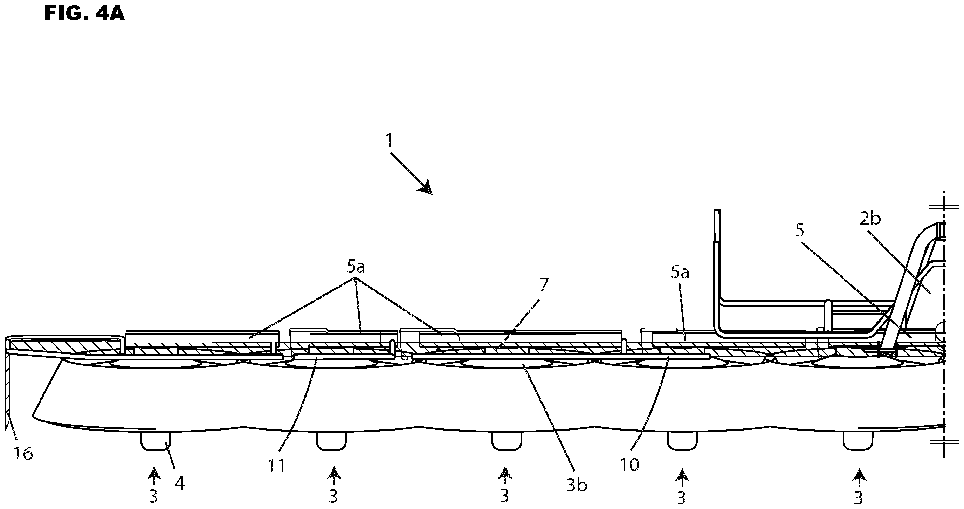

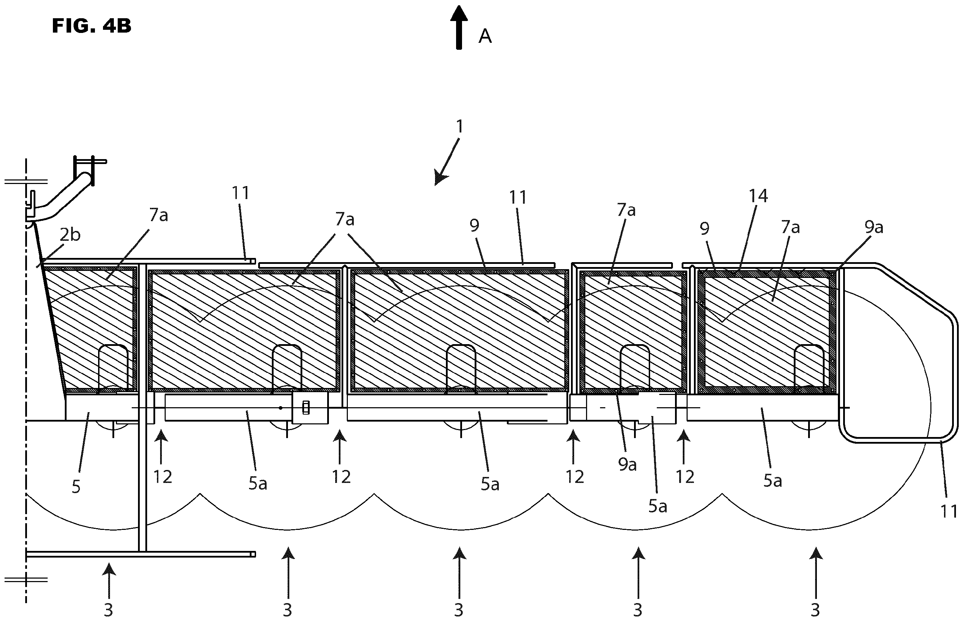

Bien entendu, le moyen de protection 7 surfacique peut s'étendre directement au-dessus des rotors 3 (par exemple au-dessus des assiettes 3b portant les bras des fourches 3a), sous ou sur la poutre 2a et les moyens 6 présents (voir figures 3 et 4), ou encore être inclinée par rapport au plan PH perpendiculaire aux axes de rotations X.

Néanmoins, le moyen de protection 7 surfacique peut recouvrir également la partie centrale du bâti 2, portant le dispositif 2b d'attelage ou d'accrochage, et au moins certains des moyens opérationnels 6 présents, ainsi qu'au moins partiellement leurs circuits d'alimentation respectifs.

En accord avec une caractéristique de l'invention, ressortant par exemple de la figure 3B, il peut être prévu que le moyen de protection 7 surfacique, ou au moins une partie 7a constitutive de ce dernier, se prolonge par une portion complémentaire 15 située dans un plan différent, en particulier un demi-plan incliné vers le bas par rapport au plan PH ou sensiblement vertical, et s'étendant devant au moins un rotor.

Préférentiellement, la portion complémentaire 15 frontale du moyen de protection 7, qui prolonge ce dernier à l'avant par au moins une partie préférentiellement orientée verticalement, est libre dans sa portion basse, voire tendue à l'aide de poids. Cette liberté d'attache, dans le cas d'une protection 7, 7a souple et flexible, permet à la portion 15 de s'escamoter avantageusement si elle venait à entrer en contact avec des végétaux coupés regroupés en andain ou tout autre obstacle. Préférablement, la longueur et/ou la position de cette portion 15 est telle qu'elle ne puisse pas venir en contact avec les fourches 3a lorsque la machine 1 est en position travail.

Afin d'éviter que cette portion 15 ne pousse les végétaux coupés, particulièrement lorsque ceux-ci sont regroupés en andains, elle peut, dans une variante, être orientée dans diverses directions et soutenue à l'aide d'éléments rigides 15a, formant tiges support ou partie de cadre.

De manière similaire, la protection contre les projections peut éventuellement, également ou alternativement, être étendue au niveau de chaque extrémité latérale de la machine 1 (en particulier du type représenté figures 1A et 1B).

A cet effet, il peut être prévu que le moyen de protection 7, préférentiellement surfacique, ou au moins une partie 7a constitutive de ce dernier, se prolonge latéralement par une portion complémentaire 16 située dans un plan différent, en particulier un demi-plan incliné vers le bas par rapport au plan PH ou sensiblement vertical, et s'étendant sur le côté extérieur de la machine 1.

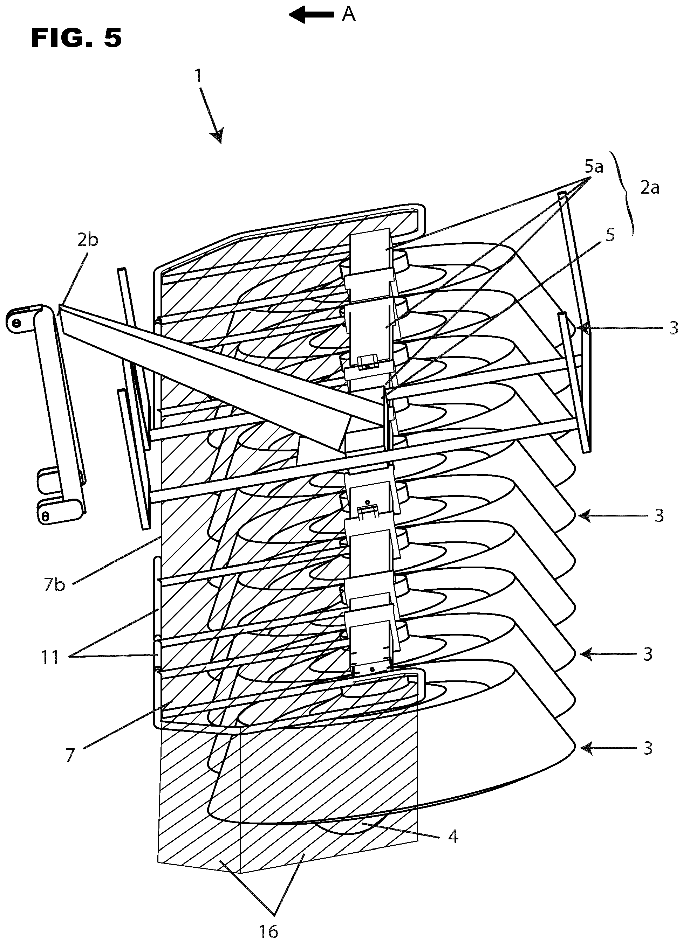

L'extrémité libre inférieure de la ou de chaque portion 16 est avantageusement positionnée proche ou juste au-dessus du sol en position de travail de la machine 1 (voir figure 5).

Bien entendu, le moyen 7 peut présenter une constitution opaque et/ou rigide (bâche, tôle(s) métallique(s), panneau(x) plastique(s)), en plusieurs parties 7a préférentiellement.

Toutefois, en accord avec un mode de réalisation préféré, le moyen de protection 7, préférentiellement surfacique, d'un seul tenant ou en plusieurs parties 7a, est réalisé en un matériau flexible, avantageusement souple et pliable, et transparent ou ajouré, au moins au niveau de certaines zones.

L'utilisation d'un tel matériau flexible facilitera l'installation du moyen 7 et permettra à l'utilisateur, malgré la présence dudit moyen 7, de vérifier visuellement l'état des points critiques (articulations, paliers, actionneurs, etc) au moins de la machine 1, préférentiellement de la totalité de cette dernière si les zones transparentes ou ajourées s'étendent sur la majorité de la surface du moyen 7. En cas de structure ajourée du moyen 7, les jours présenteront bien entendu une dimension compatible avec l'obtention d'un effet barrière vis-à-vis du fourrage.

Selon une variante de réalisation pratique privilégiée, le moyen de protection 7 consiste en un filet, en un ou plusieurs morceaux 7a, préférentiellement pourvu de zones 9 renforcées ou doublées de fixation, de passage, de pliage, de bordure ou de reprise de contraintes, incorporant des bandes, des œillets, des coutures, des fils de renfort ou analogues. Des zones 9 renforcées sont préférentiellement placées non seulement sur la périphérie, mais également au niveau de chaque point de solidarisation du moyen 7 sur la machine 1.

La mise en œuvre d'un filet est une solution efficace, simple, peu onéreuse, légère, aisée à mettre en place et à enlever, apte à s'adapter à la conformation et à la configuration du dessus de la machine 1 et pouvant présenter des passages, des replis ou des poches permettant de prendre en compte les équipements, accessoires ou autres moyens saillants ou proéminents présents sur le dessus de la machine 1. Il peut aussi autoriser aisément le passage d'un élément de liaison ou de raccordement.

Avantageusement, la taille du maillage est choisie par l'homme du métier pour, d'une part, éviter de faire barrage à la circulation d'air et donc de créer des turbulences et, d'autre part, éviter le passage des végétaux projetés. Un bon compromis pour les inventeurs semble être une taille des mailles comprise entre 1 et 100 mm, avantageusement entre 5 et 50 mm, préférentiellement entre 2 et 30 mm.

Une telle réalisation pratique du moyen 7 permettra également d'en équiper aisément des machines 1 existantes, non pourvues à l'origine.

Conformément à une caractéristique de l'invention, ressortant également des figures annexées, il peut être prévu que le moyen de protection 7, préférentiellement surfacique, s'étende également, au moins partiellement, par-dessus les parties 8a des rotors 3 à fourches 3a situées à l'arrière de la poutre 2a dans la direction d'avancement A, en étant maintenu à distance au-dessus de ces rotors 3 en position de travail de la machine de fenaison 1.

Cette extension vers l'arrière se limite avantageusement aux assiettes portant les fourches 3a, ce afin de ne pas interférer avec la projection des végétaux vers l'arrière.

En termes de solidarisation et de maintien du moyen de protection 7, préférentiellement surfacique, sur la machine 1 de fenaison, de nombreuses solutions techniques peuvent être envisagées, en fonction notamment de l'équipement et de la configuration de la machine 1.

En tout état de cause, le moyen de protection 7 ne doit pas gêner les changements de configuration de la machine 1, notamment les repliage et déploiement des segments de poutre 5a, entre les positions de travail, de manœuvre et de transport de la machine 1.

Ainsi, le moyen 7 peut être, au moins en partie, monté ou accroché sur un ou plusieurs éléments 10 d'une structure support spécifique, solidaire du châssis 2.

La machine de fenaison 1 peut aussi, de manière alternative ou en plus des éléments 10 précités, être pourvue d'un ou de plusieurs élément(s) de protection rigide(s) 11, 11a, tels que des barres, des arceaux ou analogues, arrangé(s), en configuration de travail de la machine 1, à l'avant et/ou à l'arrière des rotors 3 à fourches 3a, au-dessus de ces derniers et du châssis 2 et/ou latéralement au-delà des fourches 3a des rotors 3 montés sur les extrémités latérales de la poutre 2a. Le moyen de protection 7 peut alors être solidarisé, au moins partiellement, de manière amovible ou non, à cet élément 11, 11a ou au moins à certains de ces éléments 11, 11a, au moins en configuration de travail de la machine 1.

Par ailleurs, il peut être avantageusement prévu que, dans le cas d'une poutre 2a segmentée comprenant au moins deux segments 5, 5a équipés de rotors 3 à fourches 3a et articulés entre eux, le moyen de protection 7 soit solidarisé, de manière amovible ou non, au bâti 2 au niveau d'une ou de liaisons articulées 12 correspondante(s), au moins en configuration de travail de la machine 1.

Le moyen de protection 7 souple, préférentiellement surfacique, d'un seul tenant, ou chacune de ses parties 7a, peut ainsi accompagner les mouvements des parties du bâti 2 articulées entre elles.

En accord avec une première variante de réalisation, le moyen de protection 7, préférentiellement surfacique, est fixé de manière permanente, dans son état d'extension maximale, directement ou indirectement au bâti 2, en étant adapté pour suivre les transformations de la machine 1 entre les différents états de cette dernière et pour se conformer aux différentes configurations possibles de la machine 1.

En accord avec une seconde variante de réalisation, le moyen de protection 7, ou au moins l'une de ses parties constitutives 7a, est au moins partiellement fixée de manière amovible directement ou indirectement au bâti 2, en particulier à la poutre 2a et est au moins partiellement repliable sur lui-même ou rétractable.

En relation notamment avec cette seconde variante, il peut être prévu que la machine de fenaison 1 comporte au moins un moyen de rétractation ou d'enroulement automatique pour le moyen de protection 7, préférentiellement surfacique, ou pour au moins une de ses parties 7a constitutives, préférentiellement toutes (non représenté).

Conformément à une autre caractéristique de l'invention, il peut être prévu que le(s) moyen(s) de rétractation ou d'enroulement du ou des moyen(s) de protection 7 est(sont) commandé(s) automatiquement avant ou durant chaque passage de la machine 1 de sa configuration de travail dans sa configuration de transport. La rétractation peut par exemple se présenter sous la forme d'un pliage en accordéon, d'un enroulement, d'un rabattement ou analogue, préférentiellement en direction ou sur une pièce support ou structurelle du bâti 2.

Un tel moyen d'enroulement automatique peut notamment être présent au niveau du segment central 5 de la poutre 2a pour permettre l'escamotage d'une éventuelle partie 7a d'un moyen de protection 7 pouvant s'étendre dans cette région de la machine 1, par exemple lors du repliage de cette dernière ou d'interventions par l'utilisateur (accrochage, maintenance, réglage, ...)

Enfin, selon une caractéristique additionnelle non représentée, permettant d'adapter éventuellement la machine de fenaison 1 aux circonstances particulières rencontrées sur les différents chantiers (nature et taux d'humidité des végétaux, orientation des rotors par rapport au sol, densité du fourrage, nature du travail à réaliser, nature du sol, vitesse de travail, présence et intensité du vent, ...), il peut être prévu que le moyen 7 ou au moins certaines de ses parties 7a constitutives, soi(en)t monté(es) avec faculté de réglage en position, au moins dans un plan horizontal de la machine 1, par rapport au châssis 2.

Le moyen de protection 7 ou une partie 7a de ce dernier peut éventuellement s'étendre au moins partiellement par-dessus ou par-dessous la poutre 2a ou un segment 5, 5a de cette dernière.

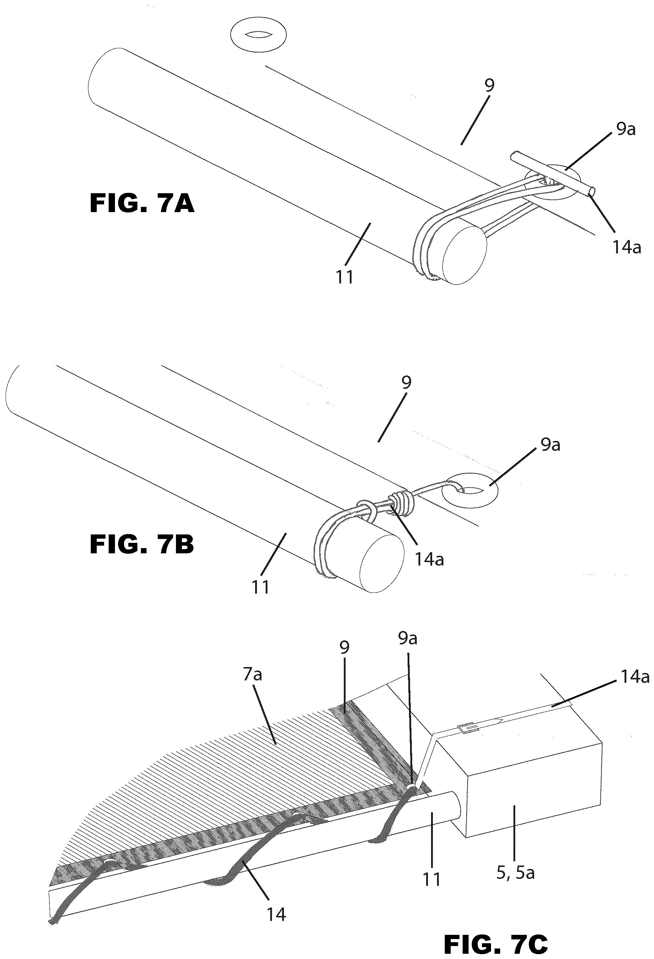

Comme le montrent à titre d'exemples les figures 7A à 7C, la fixation dudit moyen 7 ou des parties 7a de ce dernier peut être réalisée par prévision de sites ou de points d'ancrage ou d'accrochage 9a, tels que des œillets, des crochets ou analogues, au niveau des zones de bord périphériques 9, préférentiellement renforcées. Ces sites ou points 9a peuvent coopérer avec un moyen de solidarisation commun 14 ou avec des moyens de solidarisation individuels 14a, pour relier collectivement ou individuellement lesdits sites ou points 9a à la poutre 2a, à l'un des segments 5, 5a de cette dernière, à des éléments 10, des barres 11a ou à des arceaux 11 de la machine 1 (voir figures 7A à 7C), préférentiellement de manière élastique.

## Revendications

1. Machine de fenaison du type faneur ou andaineur, tractée, portée ou semi-portée, constituée essentiellement par un bâti destiné à être relié à un tracteur par un dispositif d'attelage ou d'accrochage, comprenant au moins une poutre support et portant des rotors à fourches équipés d'au moins une roue et animés, en fonctionnement, de mouvements circulaires autour d'axes de rotation sensiblement verticaux respectifs, ladite poutre étant d'un seul tenant ou présentant une constitution segmentée avec un segment central et au moins un segment latéral repliable, relié de manière articulée avec le segment central,
machine de fenaison (1) **caractérisée en ce qu'**elle comporte au moins un moyen (7) de protection de type surfacique qui s'étend principalement dans un plan sensiblement perpendiculaire aux axes de rotation (X) des rotors (3) en position de travail de la machine (1), qui est fixe par rapport au bâti (2) en phase de travail de la machine (1) et qui recouvre au moins partiellement l'avant d'au moins un rotor (3), préférentiellement de tous les rotors (3).

2. Machine selon la revendication 1, **caractérisée en ce que** le moyen (7) de protection s'étend, de manière continue ou en plusieurs parties (7a), préférentiellement sur au moins toute la largeur de travail (L) de la machine (1) et recouvre au moins les parties (8) des rotors (3) à fourches (3a) situées à l'avant de la poutre (2a) dans la direction (A) d'avancement normal de la machine (1) en utilisation.

3. Machine selon l'une quelconque des revendications 1 et 2, **caractérisée en ce que** le moyen de protection (7), d'un seul tenant ou en plusieurs parties (7a), est réalisé en un matériau flexible, avantageusement souple et pliable, et transparent ou ajouré, au moins au niveau de certaines zones.

4. Machine selon l'une quelconque des revendications 1 à 3, **caractérisée en ce que** le moyen de protection (7), ou les parties (7a) constitutives de ce dernier, présente(nt) un positionnement, une forme et des dimensions adaptés pour recouvrir au moins les zones de convergence (ZC) des différentes paires entre les rotors adjacents (3) en configuration ou phase de travail de la machine (1), lorsque lesdits rotors (3) sont alignés transversalement par rapport à la direction d'avancement (A).

5. Machine selon l'une quelconque des revendications 1 à 4, **caractérisée en ce que** le moyen de protection (7), ou au moins une partie (7a) constitutive de ce dernier, se prolonge par une portion complémentaire (15) située dans un plan différent, en particulier un demi-plan incliné vers le bas par rapport au plan (PH) ou un plan sensiblement vertical, et s'étendant devant au moins un rotor (3).

6. Machine selon l'une quelconque des revendications 1 à 5, **caractérisée en ce que** le moyen de protection (7), ou au moins une partie (7a) constitutive de ce dernier, se prolonge latéralement par une portion complémentaire (16) située dans un plan différent, en particulier un demi-plan incliné vers le bas par rapport au plan (PH) ou un plan sensiblement vertical, et s'étendant sur le côté extérieur de la machine (1).

7. Machine selon l'une quelconque des revendications 1 à 6, **caractérisée en ce que** le moyen de protection (7) consiste en un filet, en un ou plusieurs morceaux (7a), préférentiellement pourvu de zones (9) renforcées ou doublées de fixation, de passage, de pliage, de bordure ou de reprise de contraintes, incorporant des bandes, des œillets, des coutures , des fils de renfort ou analogues.

8. Machine selon l'une quelconque des revendications 1 à 7, **caractérisée en ce que** le moyen de protection (7) s'étend également, au moins partiellement, par-dessus les parties (8a) des rotors (3) à fourches (3a) situées à l'arrière de la poutre (2a) dans la direction d'avancement (A), en étant maintenu à distance au-dessus de ces rotors (3) en position de travail de la machine de fenaison (1).

9. Machine selon l'une quelconque des revendications 1 à 8, **caractérisée en ce que** le moyen de protection (7) est, au moins en partie, monté ou accroché sur un ou plusieurs éléments (10) d'une structure support spécifique, solidaire du châssis (2).

10. Machine selon l'une quelconque des revendications 1 à 9, **caractérisée en ce qu'**elle est pourvue d'un ou de plusieurs élément(s) de protection rigide(s) (11, 11a), tels que des barres, des arceaux ou analogues, arrangé(s), en configuration de travail de la machine (1), à l'avant et/ou à l'arrière des rotors (3) à fourches (3a), au-dessus de ces derniers et du châssis (2) et/ou latéralement au-delà des fourches (3a) des rotors (3) montés sur les extrémités latérales de la poutre (2a), le moyen de protection (7) étant solidarisé, au moins partiellement, de manière amovible ou non, à cet élément (11, 11a) ou au moins à certains de ces éléments, au moins en configuration de travail de la machine (1).

11. Machine selon l'une quelconque des revendications 1 à 10, **caractérisée en ce que**, dans le cas d'une poutre (2a) segmentée comprenant au moins deux segments (5, 5a) équipés de rotors (3) à fourches (3a) et articulés entre eux, le moyen de protection (7) est solidarisé, de manière amovible ou non, au bâti (2) au niveau d'une ou de liaisons articulées (12) correspondante(s), au moins en configuration de travail de la machine (1).

## Patentansprüche

1. Heuwerbungsmaschine des Wender- oder Schwadertyps, die gezogen, angebaut oder aufgesattelt wird, die im Wesentlichen aus einem Rahmen gebildet ist, der dazu bestimmt ist, mittels einer Kupplungs- oder Anhängevorrichtung mit einem Traktor verbunden zu werden, die mindestens einen Stützträger aufweist und Kreisel mit Zinken trägt, die mit mindestens einem Rad ausgestattet sind und im Betrieb in kreisförmige Bewegung um Drehachsen versetzt werden, die jeweils im Wesentlichen vertikal sind, wobei der Träger einstückig ist oder einen segmentierten Aufbau mit einem Mittelsegment und mindestens einem klappbaren Seitensegment aufweist, das angelenkt mit dem Mittelsegment verbunden ist,
wobei die Heuwerbungsmaschine (1) **dadurch gekennzeichnet ist, dass** sie mindestens ein Oberflächenschutzmittel (7) aufweist, das sich in der Arbeitsstellung der Maschine (1) hauptsächlich in einer Ebene erstreckt, die im Wesentlichen senkrecht zu den Drehachsen (X) der Kreisel (3) ist, das in der Arbeitsphase der Maschine (1) in Bezug auf den Rahmen (2) ortsfest ist und das die Vorderseite mindestens eines Kreisels (3), vorzugsweise aller Kreisel (3), zumindest teilweise abdeckt.

2. Maschine nach Anspruch 1, **dadurch gekennzeichnet, dass** sich das Schutzmittel (7), durchgehend oder aus mehreren Teilen (7a), vorzugsweise über mindestens die gesamte Arbeitsbreite (L) der Maschine (1) erstreckt und mindestens die Teile (8) der Kreisel (3) mit Zinken (3a) abdeckt, die sich in der normalen Fahrtrichtung (A) der Maschine (1) im Gebrauch auf der Vorderseite des Trägers (2a) befinden.

3. Maschine nach einem der Ansprüche 1 und 2, **dadurch gekennzeichnet, dass** das Schutzmittel (7), einstückig oder aus mehreren Teilen (7a), zumindest im Bereich bestimmter Regionen aus einem flexiblen, vorteilhafterweise weichen und biegsamen, und transparenten oder durchbrochenen Material hergestellt ist.

4. Maschine nach einem der Ansprüche 1 bis 3, **dadurch gekennzeichnet, dass** das Schutzmittel (7) oder die Bestandteile (7a) davon eine Positionierung, eine Form und Abmessungen aufweist(aufweisen), die dazu geeignet sind, mindestens die Konvergenzregionen (ZC) der verschiedenen Paare von benachbarten Kreiseln (3) in der Arbeitskonfiguration oder -phase der Maschine (1) abzudecken, wenn die Kreisel (3) quer zur Fahrtrichtung (A) ausgerichtet sind.

5. Maschine nach einem der Ansprüche 1 bis 4, **dadurch gekennzeichnet, dass** das Schutzmittel (7) oder mindestens ein Bestandteil (7a) davon mit einem zusätzlichen Abschnitt (15) verlängert ist, der sich in einer anderen Ebene befindet, insbesondere einer Halbebene, die in Bezug auf die Ebene (PH) nach unten geneigt ist oder einer im Wesentlichen vertikalen Ebene, und der sich vor mindestens einem Kreisel (3) erstreckt.

6. Maschine nach einem der Ansprüche 1 bis 5, **dadurch gekennzeichnet, dass** das Schutzmittel (7) oder mindestens ein Bestandteil (7a) davon mit einem zusätzlichen Abschnitt (16) verlängert ist, der sich in einer anderen Ebene befindet, insbesondere einer Halbebene, die in Bezug auf die Ebene (PH) nach unten geneigt ist oder einer im Wesentlichen vertikalen Ebene, und der sich auf der Außenseite der Maschine (1) erstreckt.

7. Maschine nach einem der Ansprüche 1 bis 6, **dadurch gekennzeichnet, dass** das Schutzmittel (7) aus einem Netz aus einem oder mehreren Teilstücken (7a) besteht, das vorzugsweise mit verstärkten oder verdoppelten Befestigungs-, Durchgangs-, Klapp-, Einfassungsregionen (9) oder Regionen zur Belastungsaufnahme versehen ist, umfassend Bänder, Ösen, Nähte, Verstärkungsfäden oder Ähnliches.

8. Maschine nach einem der Ansprüche 1 bis 7, **dadurch gekennzeichnet, dass** das Schutzmittel (7) sich außerdem, zumindest teilweise, über die Teile (8a) der Kreisel (3) mit Zinken (3a) erstreckt, die sich in Fahrtrichtung (A) auf der Rückseite des Trägers (2a) befinden, wobei es in der Arbeitsstellung der Heuwerbungsmaschine (1) in einem Abstand über diesen Kreiseln (3) gehalten wird.

9. Maschine nach einem der Ansprüche 1 bis 8, **dadurch gekennzeichnet, dass** das Schutzmittel (7) zumindest teilweise an einem oder mehreren Elementen (10) an einer spezifischen Stützstruktur montiert oder angehängt ist, die fest mit dem Chassis (2) verbunden ist.

10. Maschine nach einem der Ansprüche 1 bis 9, **dadurch gekennzeichnet, dass** sie mit einem oder mehreren starren Schutzelement(en) (11, 11a) wie beispielsweise Stangen, Bügeln oder Ähnlichem versehen ist, das(die) in der Arbeitskonfiguration der Maschine (1) auf der Vorderseite und/oder auf der Rückseite der Kreisel (3) mit Zinken (3a), über diesen und dem Chassis (2) und/oder seitlich über die Zinken (3a) der Kreisel (3) hinausgehend, die an den seitlichen Enden des Trägers (2a) montiert sind, angeordnet ist(sind), wobei das Schutzmittel (7) zumindest teilweise, lösbar oder unlösbar, zumindest in der Arbeitskonfiguration der Maschine (1) fest mit diesem Element (11, 11a) oder mindestens mit einigen dieser Elemente verbunden ist.

11. Maschine nach einem der Ansprüche 1 bis 10, **dadurch gekennzeichnet, dass** im Fall eines segmentierten Trägers (2a), der mindestens zwei Segmente (5, 5a) umfasst, die mit Kreiseln (3) mit Zinken (3a) ausgestattet sind und aneinander angelenkt sind, das Schutzmittel (7), lösbar oder unlösbar, im Bereich einer entsprechenden Gelenkverbindung (12) oder von entsprechenden Gelenkverbindungen zumindest in der Arbeitskonfiguration der Maschine (1) fest mit dem Rahmen (2) verbunden ist.

## Claims

1. Haymaking machine of the tedder or windrower type, towed, mounted or semi-mounted, essentially consisting of a frame designed to be connected to a tractor by a hitch or coupling device, comprising at least one support beam and carrying rotors with forks equipped with at least one wheel and driven, in operation, by circular movements about respective substantially vertical axes of rotation, said beam being in one piece or having a segmented constitution with a central segment and at least one folding lateral segment hinged to the central segment,
haymaking machine (1) **characterised in that** it comprises at least one protection means (7) of the surface type which extends mainly in a plane substantially perpendicular to the axes of rotation (X) of the rotors (3) in the working position of the machine (1), which is fixed relative to the frame (2) in the working phase of the machine (1) and which at least partially covers the front of at least one rotor (3), preferably all of the rotors (3).

2. Machine according to claim 1, **characterised in that** the protection means (7) extends, continuously or in a plurality of parts (7a), preferably over at least the whole of the working width (L) of the machine (1) and covers at least the parts (8) of the rotors (3) with forks (3a) situated at the front of the beam (2a) in the direction (A) of normal advance of the machine (1) during use.

3. Machine according to any one of claims 1 and 2, **characterised in that** the protection means (7), in one piece or in a plurality of parts (7a), is made of a material which is flexible, advantageously pliant and foldable, and transparent or apertured, at least at the level of some areas.

4. Machine according to any one of claims 1 to 3, **characterised in that** the protection means (7), or the parts (7a) of which it consists, exhibits a positioning, shape and size adapted to cover at least the areas of convergence (ZC) of the different pairs between the adjacent rotors (3) in the working configuration or phase of the machine (1), when said rotors (3) are aligned transversely relative to the direction of advance (A).

5. Machine according to any one of claims 1 to 4, **characterised in that** the protection means (7), or at least a part (7a) of which the latter consists, is extended by a complementary portion (15) situated in a different plane, in particular a half-plane inclined downwardly relative to the plane (PH) or a substantially vertical plane, and extending in front of at least one rotor (3).

6. Machine according to any one of claims 1 to 5, **characterised in that** the protection means (7), or at least a part (7a) of which the latter consists, is extended laterally by a complementary portion (16) situated in a different plane, in particular a half-plane inclined downwardly relative to the plane (PH) or a substantially vertical plane, and extending on the outer side of the machine (1).

7. Machine according to any one of claims 1 to 6, **characterised in that** the protection means (7) consists of a mesh, in one or more pieces (7a), preferably provided with reinforced or lined areas (9) for fixing, passage, folding, edging or absorbing stresses, incorporating bands, eyelets, seams, reinforcing threads or the like.

8. Machine according to any one of claims 1 to 7, **characterised in that** the protection means (7) also extends, at least partially, over the parts (8a) of the rotors (3) with forks (3a) situated at the rear of the beam (2a) in the direction of advance (A), being kept at a distance above these rotors (3) in the working position of the haymaking machine (1).

9. Machine according to any one of claims 1 to 8, **characterised in that** the protection means (7) is, at least partly, mounted on or coupled to one or more elements (10) of a specific support structure integral with the chassis (2).

10. Machine according to any one of claims 1 to 9, **characterised in that** it is provided with one or more rigid protection elements (11, 11a) such as bars, arches or the like, arranged, in the working configuration of the machine (1), at the front and/or at the rear of the rotors (3) with forks (3a), above the rotors and the chassis (2) and/or laterally beyond the forks (3a) of the rotors (3) mounted on the lateral ends of the beam (2a), the protection means (7) being fixed, at least partially, removably or otherwise, to this element (11, 11a) or at least to some of these elements, at least in the working configuration of the machine (1).

11. Machine according to any one of claims 1 to 10, **characterised in that**, in the case of a segmented beam (2a) comprising at least two segments (5, 5a) equipped with rotors (3) with forks (3a) and hinged together, the protection means (7) is fixed, removably or otherwise, to the frame (2) at the level of one or more corresponding hinged connections (12), at least in the working configuration of the machine (1).
